# EUROPÄISCHE PATENTANMELDUNG

(11) **EP 4 559 749 A1**
(43) Veröffentlichungstag der Anmeldung: **28.05.2025**
(21) Anmeldenummer: 23212251.5
(22) Anmeldetag: 27.11.2023
(51) Int. Cl.: B60P 7/15

(54) **TRAGBALKENBAUGRUPPE**

(71) Anmelder: Westdeutscher Drahtseil-Verkauf Dolezych GmbH & Co. KG, 44147 Dortmund (DE)
(72) Erfinder: LOBER, Toni, 44141 Dortmund (DE)
(74) Vertreter: Andrejewski - Honke Patent- und Rechtsanwälte Partnerschaft mbB

(57) **Zusammenfassung**

Gegenstand der Erfindung ist eine Tragbalkenbaugruppe zur Verwendung in einem Lastenaufbau (1). Dazu ist die Baugruppe mit wenigstens einem zwischen zwei sich gegenüberliegenden Ladebordwänden (2) fixierbaren Tragbalken (4) ausgerüstet. Der Tragbalken (4) greift jeweils endseitig mithilfe einer lösbaren Verriegelungseinheit (5, 6, 7, 8, 9) in eine zugehörige Gleitschiene (3) der Ladebordwand (2) ein. Die Verriegelungseinheit (5, 6, 7, 8, 9) weist ein Löseelement (8, 9) für wenigstens einen Verriegelungszapfen (7) auf. Der Verriegelungszapfen (7) gibt in mithilfe des Löseelementes (8, 9) vorgegebenem entriegelten Zustand die Verriegelungseinheit (5, 6, 7, 8, 9) gegenüber der Gleitschiene (3) frei und legt die Verriegelungseinheit (5, 6, 7, 8, 9) gegenüber der Gleitschiene (3) in verriegeltem Zustand fest. Erfindungsgemäß überführt zumindest eine Schrägstellung des Tragbalkens (4) die hieran drehbar angeschlossene Verriegelungseinheit (5, 6, 7, 8, 9) in ihrem entriegeltem Zustand.

## Beschreibung

Die Erfindung betrifft eine Tragbalkenbaugruppe zur Verwendung in einem Lastenaufbau, mit wenigstens einem zwischen zwei sich gegenüberliegenden Ladebordwänden fixierbaren Tragbalken, welcher jeweils endseitig mithilfe einer lösbaren Verriegelungseinheit in eine zugehörige Gleitschiene der Ladebordwand eingreift, wobei die Verriegelungseinheit ein Löseelement für wenigstens einen Verriegelungszapfen aufweist, und wobei der Verriegelungszapfen in mithilfe des Löseelementes vorgegebenem entriegelten Zustand die Verriegelungseinheit gegenüber der Gleitschiene freigibt und in verriegeltem Zustand gegenüber der Gleitschiene festlegt.

Die zuvor bereits beschriebene Tragbalkenbaugruppe setzt sich in der Regel aus dem wenigstens einen Tragbalken und den beiden Gleitschienen an den sich gegenüberliegenden Ladebordwänden zusammen. Die Gleitschienen verlaufen dabei meistens in Vertikalrichtung, wohingegen der Tragbalken zwischen den beiden Gleitschienen und damit den sich gegenüberliegenden Ladebordwänden überwiegend parallel angeordnet ist. Auf diese Weise lassen sich auf dem Tragbalken im Innern des hiermit ausgerüsteten Lastenanhängers beispielsweise Paletten oder auch bestimmte Güter direkt transportieren. Hierdurch ist eine Segmentierung und bessere Ausnutzung des vom Lastenaufbau zur Verfügung gestellten Ladevolumens möglich.

Eine solche Tragbalkenbaugruppe wird in der US 8 979 451 B1 oder auch der US 2023/0219482 A1 beschrieben. In erstgenanntem Fall ist die Tragbalkenbaugruppe zusätzlich noch mit einem federbeaufschlagten Seil ausgerüstet, um die Verstellung des jeweiligen Tragbalkens gegenüber den sich gegenüberliegenden Gleitschienen zu erleichtern. Hierbei wird der Tragbalken in einer Verschieberichtung zwischen den Ladeboardwänden in seiner Höhe bzw. Neigung verändert. Im Rahmen der an zweiter Stelle genannten Veröffentlichung ist zu diesem Zweck die Verriegelungseinheit mit einem Löseelement ausgerüstet, welches für eine Längsverstellung des Verriegelungszapfens in Axialrichtung des Tragebalkens sorgt.

Beide bisherigen Vorgehensweisen stoßen in der Praxis auf Probleme. So besteht bei Verwendung des Seiles nach der US 8 979 451 B2 das Problem, dass das Seil im Innern der Gleitschiene Beschädigungen erfährt, verschmutzt wird oder sonst wie eingeklemmt werden kann. Bei der an zweiter Stelle genannten US 2023/0219482 A1 fällt auf, dass die Beaufschlagung des Löseelementes zur Axialverstellung des Verriegelungszapfens eine signifikante Betätigungskraft erfordert, welche dem rauen Alltagsbetrieb kaum gewachsen ist. Hinzukommt wesentlich, dass etwaige Fahrzeugbewegungen und damit auch Bewegungen der gegenüberliegenden Ladebordwände zueinander unter Umständen zu einer unerwünschten Entriegelung führen respektive führen können.

Bei einer anderen Tragbalkenbaugruppe, wie sie in der EP 3 551 499 B1 beschrieben wird, sind ein erster und zweiter Motor vorgesehen, über die die Verstellung zweier Schienen bzw. Tragbalken entlang der Gleitschienen erfolgt. Eine solche Vorgehensweise ist zwar komfortabel, setzt allerdings den einwandfreien Betrieb solcher Motoren voraus. Dazu ist eine zusätzliche Energieversorgung erforderlich. Das ist einerseits kostenträchtig und andererseits im Hinblick auf die zusätzliche Energieversorgung problematisch.

Der Erfindung liegt folglich das technische Problem zugrunde, eine derartige Tragbalkenbaugruppe so weiterzuentwickeln, dass unter Berücksichtigung eines kompakten und kostenoptimierten Aufbaus eine einwandfreie Funktionsweise zur Verfügung gestellt wird.

Zur Lösung dieser technischen Problemstellung schlägt die Erfindung bei einer gattungsgemäßen Tragbalkenbaugruppe zur Verwendung in einem Lastenaufbau vor, dass zumindest eine Schrägstellung des Tragbalkens die hieran drehbar angeschlossene Verriegelungseinheit in ihren entriegelten Zustand überführt.

D.h., um den Tragbalken im Vergleich zu den sich gegenüberliegenden Ladebordwänden verschieben bzw. ausrichten zu können, ist es zunächst einmal erforderlich, die Verriegelungseinheit in den entriegelten Zustand zu überführen. Das erfolgt erfindungsgemäß durch zumindest eine Schrägstellung des Tragbalkens. Bei dieser Schrägstellung kann der Tragbalken bedarfsweise und zusätzlich teleskopieren. In jedem Fall korrespondiert die Schrägstellung des Tragbalkens dazu, dass das meistens linear beaufschlagbare Löseelement beaufschlagt wird und die Verriegelungseinheit entriegelt. Nimmt dagegen der Tragbalken seine horizontale Normalposition ein, so wird das Löseelement nicht beaufschlagt und lenkt die Verriegelungseinheit in ihre verriegelte Stellung (wieder) zurück. Dadurch kann der Tragbalken gegenüber den zu diesem Zweck meistens an den Ladebordwänden vorgesehenen Gleitschienen nicht nur in der Höhe, sondern auch im Hinblick auf eine etwaige Schrägstellung verfahren werden, und zwar in entriegelter Stellung der Verriegelungseinheit.

Im Gegensatz zum Stand der Technik insbesondere nach der US 2023/0219482 A1 wird folglich im Rahmen der Erfindung so vorgegangen, dass der Verriegelungszapfen und folglich auch die Verriegelungseinheit zur Entriegelung gegenüber dem Tragbalken und damit auch der Gleitschiene nicht axial beaufschlagt wird. Vielmehr wird die Entriegelung dadurch vorgenommen, dass der Tragbalken die beschriebene Schrägstellung gegenüber den Gleitschienen und damit auch den Ladebordwänden erfährt. Durch die Schrägstellung des Tragbalkens wird die an den Tragbalken drehbar angeschlossene Verriegelungseinheit in ihren entriegelten Zustand überführt und zwar mit Hilfe des Löseelementes. Anschließend kann der Tragbalken innerhalb der Gleitschienen wunschgemäß verfahren werden.

Dadurch lässt sich eine besonders kraftarme und einfache Beaufschlagung des in die betreffende Gleitschiene eingreifenden Verriegelungszapfens mithilfe des Löseelementes erreichen. Die erfindungsgemäß realisierte Schrägstellung des Tragbalkens zur Überführung der Verriegelungseinheit in ihren entriegelten Zustand stellt darüber hinaus sicher, dass der entriegelte Zustand der Verriegelungseinheit ausdrücklich nicht durch beispielsweise Fahrzeugbewegungen unbeabsichtigt herbeigeführt wird oder herbeigeführt werden kann. Denn die an dieser Stelle beobachteten Winkel der Schrägstellung zwischen dem Tragbalken und der zugehörigen Ladebordwand bzw. der Gleitschiene in oder an Ladebordwand werden im Fahrbetrieb nicht beobachtet und nicht erreicht, so dass - im Gegensatz zum Stand der Technik nach der US 2023/0219482 A1 - Fahrzeugbewegungen oder allgemein Bewegungen des Lastenaufbaus im Betrieb erfindungsgemäß nicht zu einer unbeabsichtigten Entriegelung einer oder beider Verriegelungseinheiten führen.

Tatsächlich korrespondiert die Schrägstellung des Tragbalkens im Allgemeinen dazu, dass hierdurch das Löseelement beaufschlagt wird und den Verriegelungszapfen freigibt. Die Beaufschlagung des Löseelementes kann dabei durch eine Schulter an der Verriegelungseinheit mechanisch herbeigeführt werden. Grundsätzlich lässt sich das Löseelement aber auch unabhängig hiervon beispielsweise linear und manuell beaufschlagen, um die Verriegelungseinheit in den entriegelten Zustand zu überführen.

Die originäre Beaufschlagung der Verriegelungseinheiten des Tragbalkens mag dabei so vorgenommen werden, dass beispielsweise eine endseitige Verriegelungseinheit zunächst manuell entriegelt wird, indem das Löseelement die zuvor beschriebene lineare Beaufschlagung durch einen Bediener erfährt. Da der Tragbalken generell teleskopierbar ausgebildet ist, lässt sich der Tragbalken anschließend schräg stellen, so dass die andere gegenüberliegende Verriegelungseinheit durch die Schrägstellung des Tragbalkens und die hiermit verbundene Drehbewegung des Tragbalkens gegenüber der in die Gleitschiene eingreifenden Verriegelungseinheit die betreffende Verriegelungseinheit in ihren entriegelten Zustand überführt.

Tatsächlich greift der Verriegelungszapfen in der Regel in eine oder mehrere Öffnungen in der zugehörigen Gleitschiene ein. Außerdem ist die Auslegung meistens noch so getroffen, dass die Verriegelungseinheit mit seitlichen Anschlägen in Axialrichtung der Gleitschienen verfahren wird und mithilfe dieser Anschläge im Innern der Gleitschienen geführt wird. Der betreffende Verriegelungszapfen sorgt nun für die Höhenausrichtung des Tragbalkens. Dabei sind grundsätzlich auch Schrägstellungen des Tragbalkens möglich. Um an dieser Stelle eventuelle Längenänderungen auszugleichen, kann zu diesem Zweck der Tragbalken generell teleskopierbar ausgebildet sein.

Im Regelfall sind mehrere Verriegelungszapfen vorgesehen. Außerdem hat es sich bewährt, wenn die Verriegelungszapfen am Außenumfang eines Verriegelungszylinders angeordnet sind. Die Beaufschlagung des Löseelementes zur Entriegelung der Verriegelungseinheit korrespondiert in diesen Fall dazu, dass im Allgemeinen ein dem in Eingriff in die Gleitschiene befindlichen Verriegelungszapfen gegenüberliegender Verriegelungszapfen mithilfe eines Verriegelungsblockes blockiert wird. Wird nun der Verriegelungsblock mithilfe des Löseelementes freigegeben, so kann als Folge hiervon der Verriegelungszylinder rotieren. Dadurch kommt es ebenfalls dazu, dass der zuvor in Eingriff mit der zugehörigen Gleitschiene befindliche Verriegelungszapfen verschwenkt wird und dadurch die Verriegelungseinheit in ihren entriegelten Zustand übergeht.

Im verriegelten Zustand der Verriegelungseinheit sorgt demgegenüber der Verriegelungsblock dafür, dass der dem Verriegelungsblock nächste Verriegelungszapfen und damit auch der Verriegelungszylinder blockiert wird. Das geschieht dann, wenn typischerweise der dem Verriegelungsblock gegenüberliegende Verriegelungszapfen in beispielsweise eine Öffnung, eine Rastung etc. der Gleitschiene eingreift und der Tragbalken mit seiner Verriegelungseinheit in dieser Position gegenüber der betreffenden Gleitschiene fixiert werden soll. Auf diese Weise lässt sich der Tragbalken in gewünschter Ausrichtung und auch gegebenenfalls Schrägstellung zwischen den beiden durch den Tragbalken verbundenen Gleitschienen und damit auch den sich gegenüberliegenden Ladebordwänden festlegen.

Der Verriegelungszylinder mit den am Außenumfang vorgesehenen Verriegelungszapfen verfügt typischerweise über eine zugeordnete Wickelfeder, die in seinem Innern angeordnet sein mag. Bei dieser Wickelfeder handelt es sich um eine im Innern des Verriegelungszylinders angeordnete Spiralfeder, die in einer Verschieberichtung des Tragbalkens zwischen den Ladebordwänden gespannt wird und in der entgegengesetzten Richtung durchrutscht. Bei dieser Wickelfeder handelt es sich um eine im Innern des Verriegelungszylinders angeordnete Spiralfeder, die in einer Verschieberichtung des Tragbalkens zwischen den Ladebordwänden gespannt wird und in der entgegengesetzten Richtung durchrutscht. Auf diese Weise lässt sich der Tragbalken in entriegeltem Zustand seiner jeweils endseitigen beiden Verriegelungseinheiten in der gewünschten Höhe zwischen den Ladebordwänden platzieren und anschließend sorgen die Verriegelungseinheiten dafür, dass der Tragbalken in der gewünschten Position verriegelt wird.

Der Tragbalken lässt sich unabhängig hiervon mit den an seinen beiden Enden, also jeweils endseitig, vorgesehenen und zugehörigen sowie lösbaren Verriegelungseinheiten insgesamt und zunächst einmal in eine Aussparung der jeweils zugehörigen Gleitschienen einsetzen. Diese Aussparung findet sich meistens fußseitig der Gleitschienen, so dass eine besonders einfache Bedienung möglich ist. Anschließend wird der Tragbalken in der gewünschten Höhe orientiert, wie dies zuvor beschrieben worden ist.

Darüber hinaus stellt die Wickelfeder sicher, dass diese fest mit dem Verriegelungszylinder verbunden ist. Über eine Achse lässt sich die fragliche Wickelfeder beaufschlagen. Dazu ist die Wickelfeder mit ihrem spiralinnenseitigen Ende an die Achse und dem spiralaußenseitigen Ende an dem Verriegelungszylinder angeschlossen. Zur Aufwicklung der Wickelfeder korrespondiert in der Regel eine Abwärtsbewegung des Tragbalkens in den ihn führenden Gleitschienen. In der anderen Richtung bzw. Drehrichtung wickelt sich die Feder ab, bis der Verriegelungszylinder durchrutscht. Dadurch wird eine Beschädigung der Wickelfeder bei einer Drehbelastung vermieden, wenn der Tragbalken aufwärts innerhalb der Gleitschienen bewegt wird.

Darüber hinaus ist die fragliche und spiralinnenseitig mit der Wickelfeder gekoppelte Achse jeweils beidseitig über eine Sicherungsscheibe festgelegt. Das kann relativ zum Tragbalken erfolgen. Die Sicherungsscheibe sorgt bei einem zu hohen Drehmoment an der Wickelfeder dafür, dass die fragliche Achse durchdrehen kann. Dadurch werden Überlastungen der Wickelfeder vermieden und kann zugleich die Wickelfeder vorgespannt werden.

Wie bereits erläutert, ist der Tragbalken an seinen beiden Enden, also jeweils endseitig, mit der zugehörigen und lösbaren Verriegelungseinheit ausgerüstet und greift in die korrespondierende Gleitschiene ein. Für die jeweilige Höhenverrastung sorgt der zugehörige Verriegelungszapfen, welcher hierzu in die Öffnung in der Gleitschiene, einen Rastvorsprung etc. eingreift oder sonst wie für eine entsprechende Blockade der Verriegelungseinheit gegenüber der Gleitschiene sorgt. Dadurch wird der Tragbalken in der gewünschten Position und Ausrichtung zwischen den beiden sich gegenüberliegenden Gleitschienen festgelegt.

Der zuvor bereits angesprochene und die Verriegelungszapfen tragende Verriegelungszylinder ist in der Regel drehbar um die bereits genannte Achse ausgebildet. Die Verriegelungszapfen können dabei am Außenumfang des Verriegelungszylinders jeweils äquidistant angeordnet sein. Die fragliche Achse dient darüber hinaus und vorteilhaft zugleich als drehbare Lagerung für den ebenfalls bereits angesprochenen und in die Gleitschiene eingreifenden Führungsflansch, und zwar gegenüber dem Tragbalken. Der Führungsflansch ist dabei meistens mit dem einen bzw. den mehreren in die zugehörige Gleitschiene eingreifenden Anschlägen ausgerüstet. In der Regel sind zwei den Verriegelungszylinder zwischen sich aufnehmende Führungsflansche vorgesehen.

Die beiden Führungsflansche und der Verriegelungszylinder sind dabei um die gemeinsame Achse drehbar an den Tragbalken angeschlossen. Dadurch führt eine Beaufschlagung des Verriegelungsblockes mithilfe des Löseelementes nicht nur dazu, dass sich der Verriegelungszylinder drehen kann und der Verriegelungszapfen verschwenkt wird. Sondern zugleich kommt es dazu, dass die beiden Führungsflansche ebenfalls eine Dreh- bzw. Schwenkbewegung in entriegeltem Zustand der Verriegelungseinheit vollführen bzw. vollführen können, und zwar um die mit dem Verriegelungszylinder gemeinsame Achse.

Das Löseelement ist im Allgemeinen als linear beaufschlagbarer Löseschieber ausgebildet. Zu diesem Zweck greift der Löseschieber mit zumindest einem Führungszapfen in eine Linearführung am Tragbalken ein. Dadurch wird das Löseelement bzw. der Löseschieber entlang des Tragbalkens und in seiner Axialrichtung linear geführt. Eine Beaufschlagung des Löseelementes bzw. Löseschiebers zur Einnahme des entriegelten Zustandes der Verriegelungseinheit korrespondiert folglich dazu, dass der fragliche Löseschieber bzw. das Löseelement axial bzw. linear in Bezug auf den Tragbalken und gegenüber diesem beaufschlagt wird. Diese lineare Beschlagung des Löseschiebers kann entweder manuell über eine Handhabe erfolgen oder dadurch, dass der Tragbalken schräg gestellt wird und über eine Schulter das Löseelement beaufschlagt.

Der Löseschieber ist im Allgemeinen und im Querschnitt U-förmig ausgebildet. Außerdem setzt sich der Löseschieber im Wesentlichen aus einem Verriegelungszapfen sowie der Handhabe zusammen. Die in diesem Zusammenhang beobachtete U-Basis des Löseschiebers ist dabei vorteilhaft als mit dem Verriegelungszapfen bzw. dem Verriegelungszylinder wechselwirkender und zuvor bereits angesprochener Verriegelungsblock ausgebildet. Dazu durchgreift der Verriegelungsblock als Führungszapfen die Linearführung im Tragbalken, sodass sich die Beaufschlagung des Löseelementes bzw. Löseschiebers in Axialrichtung des Tragbalkens erklärt und dafür sorgt, dass der Verriegelungsblock vom betreffenden Verriegelungszapfen entfernt respektive in diesen eingreift.

Der Verriegelungsblock ist darüber hinaus mit zumindest einer ihn in Richtung des Verriegelungszapfens bzw. des Verriegelungszylinders beaufschlagenden Feder ausgerüstet. Dadurch wird der Verriegelungsblock in unbeaufschlagtem Zustand an den Verriegelungszylinder angelegt und kann mit einem am Außenumfang des Verriegelungszylinders vorgesehenen Verriegelungszapfen derart wechselwirken, dass auf diese Weise der Verriegelungszylinder festgehalten wird und seine Rotation nicht erfolgen kann. Außerdem sorgt die fragliche Feder dafür, dass der Verriegelungsblock schwimmend gegenüber der Handhabe gelagert wird. Dazu handelt es sich bei der Feder meistens um eine Torsionsfeder. Durch die Reibung zwischen dem Verriegelungsblock und dem Verriegelungszapfen bzw. dem Verriegelungszylinder bleibt der Verriegelungsblock folglich immer in seiner Verriegelungsstellung bzw. in der Verriegelungsstellung der Verriegelungseinheit, und zwar so lange Last auf dem Tragbalken liegt oder angreift.

Der Löseschieber wird dabei seinerseits gegenüber dem Tragbalken mithilfe einer weiteren Feder beaufschlagt, und zwar in Linearrichtung bzw. entlang der Linearführung. Denn der Löseschieber greift mit dem Führungszapfen bzw. Verriegelungsblock in die fragliche Linearführung am Tragbalken ein. Darüber hinaus sorgt die vorteilhaft als Torsionsfeder ausgebildete weitere und zuvor angesprochene Feder für die schwimmende Lagerung des betreffenden Verriegelungsblockes, und zwar gegenüber der Handhabe. Der Verriegelungsblock und die Handhabe stellen beide Bestandteile des Löseschiebers dar. Durch die schwimmende Lagerung des Verriegelungsblockes lassen sich etwaige Längenänderungen bei einer (geringfügigen) Schrägstellung des Tragbalkens durch Fahrzeugbewegungen ausgleichen. Solange Last auf dem Tragbalken liegt oder vorhanden ist, sorgt die schwimmende Lagerung mithilfe der Feder bzw. Torsionsfeder dafür, dass mit Fahrzeugbewegungen verbundene (geringfügige) Bewegungen der Handhabe gegenüber dem Verriegelungsblock aufgefangen werden. Die Handhabe mag sich hierbei gegenüber dem Verriegelungsblock bewegen, was aufgrund der schwimmenden Lagerung und der zwischengeschalteten Feder bzw. Torsionsfeder zugelassen wird. An der grundsätzlich eingenommenen verriegelten Stellung ändert dies nichts, weil durch die am Tragbalken angreifende Last der Verriegelungsblock und der zugehörige Verriegelungszapfen nach wie vor miteinander wechselwirken und in Eingriff bleiben.

Für den eigentlichen Entriegelungsvorgang ist es demgegenüber erforderlich, dass der Verriegelungsblock gegenüber dem Verriegelungszapfen linear verfahren wird. Hierfür sorgt die Handhabe bei einer manuellen Beaufschlagung oder erfolgt diese Axialbewegung gleichsam automatisch dann, wenn der Tragbalken schräggestellt wird. Das setzt in beiden Fällen regelmäßig voraus, dass der Tragbalken nicht mit einer zusätzlichen Last beaufschlagt wird, so dass der Verriegelungsblock von dem Verriegelungszapfen entfernt werden kann.

Außerdem ist der Löseschieber meistens noch mit einer Aufnahme für die Achse bzw. Drehachse des Verriegelungszylinders ausgerüstet. Die Aufnahme ist dazu typischerweise halbgeöffnet ausgelegt, sodass bei einer Beaufschlagung des Löseelementes bzw. Löseschiebers zur Einnahme der entriegelten Stellung der Verriegelungseinheit das Löseelement bzw. der Löseschieber von der Achse entfernt werden kann. Mit dieser Bewegung einher geht eine Beaufschlagung des Verriegelungsblocks zur Freigabe des zuvor gefangenen Verriegelungszapfens.

Dadurch wird der Verriegelungszylinder freigegeben und kann verschwenken. Gleichzeitig wird hierdurch eine Schwenkbewegung der beiden den Verriegelungszylinder zwischen sich aufnehmenden Führungsflansche gegenüber der Gleitschiene zugelassen. Hierzu korrespondiert die entriegelte Position der Verriegelungseinheit.

Im Ergebnis wird hierdurch eine Tragbalkenbaugruppe zur Verfügung gestellt und realisiert, die kraftarm und funktionssicher von ihrem verriegelten Zustand der zugehörigen Verriegelungseinheit in deren entriegelten Zustand überführt werden kann. Denn dieser Übergang korrespondiert konkret dazu, dass hierzu das Löseelement auf den Verriegelungsblock arbeitet. Der Verriegelungsblock gibt den Verriegelungszylinder frei. Dadurch kann der Verriegelungszylinder rotieren bzw. verschwenken. Gleiches mag auch für die beiden den Verriegelungszylinder zwischen sich aufnehmenden Führungsflansche gelten.

Als Folge hiervon lässt sich die Verriegelungseinheit jeweils endseitig des Tragbalkens gegenüber dem Tragbalken um die gemeinsame Drehachse der Führungsflansche und des Verriegelungszylinders verschwenken. Dadurch kann der Tragbalken insgesamt gegenüber der Gleitschiene verfahren werden. Das lässt sich von einem Bediener typischerweise manuell und kraftarm realisieren.

Im Gegensatz zum Stand der Technik nach der US 2023/0219482 A1 ist erfindungsgemäß die lineare Beaufschlagung des Löseschiebers zur Entriegelung mit der schwimmenden Lagerung des Verriegelungsblocks gegenüber der Handhabe gekoppelt. Durch die schwimmende Lagerung führen etwaige Verschiebungen des Tragbalkens aufgrund von beispielsweise Fahrzeugbewegungen nicht dazu, dass die zugehörige Verriegelungseinheit unbeabsichtigt entriegelt wird. Dadurch wird ein enormer Sicherheitsgewinn im Vergleich zum Stand der Technik erreicht. Hierin sind die wesentlichen Vorteile zu sehen.

Es sollte in diesem Zusammenhang noch betont werden, dass die Tragbalkenbaugruppe mit jedwedem Lastenaufbau kombiniert werden kann. D.h., dieser Lastenaufbau kann den Laderaum eines LKWs, eines Eisenbahnwaggons, eines Schiffsraumes darstellen. Grundsätzlich kann es sich bei dem Lastenaufbau auch um einen Container handeln. Außerdem sind die Gleitschienen in ihrer Auslegung und Konstruktion frei, weil es lediglich darauf ankommt, mithilfe des Verriegelungszapfens eine lösbare Festlegung der Verriegelungseinheit gegenüber der betreffenden Gleitschiene zu bewerkstelligen.

Nachfolgend wird die Erfindung anhand einer lediglich ein Ausführungsbeispiel darstellenden Zeichnung näher erläutert; es zeigen:
- Fig. 1: die erfindungsgemäße Tragbalkenbaugruppe in Verbindung mit einem zugehörigen Lastenaufbau,
- Fig. 2: die Tragbalkenbaugruppe mit zugehöriger Verriegelungseinheit in Explosionsdarstellung,
- Fig. 3A und 3B: die Verriegelungseinheit inklusive dem Tragbalken teilweise in einem Längsschnitt (Fig. 3A) und Figur 3B im Querschnitt in verriegelter Position und
- Fig. 4A und 4B: erneut einen Längsschnitt und Querschnitt wie in der Figur 3A und 3B gezeigt, allerdings in entriegelter und maximal verschwenkbarer Position.
- Fig. 5A und 5B: die Gleitschiene im Schnitt und in einer Draufsicht.

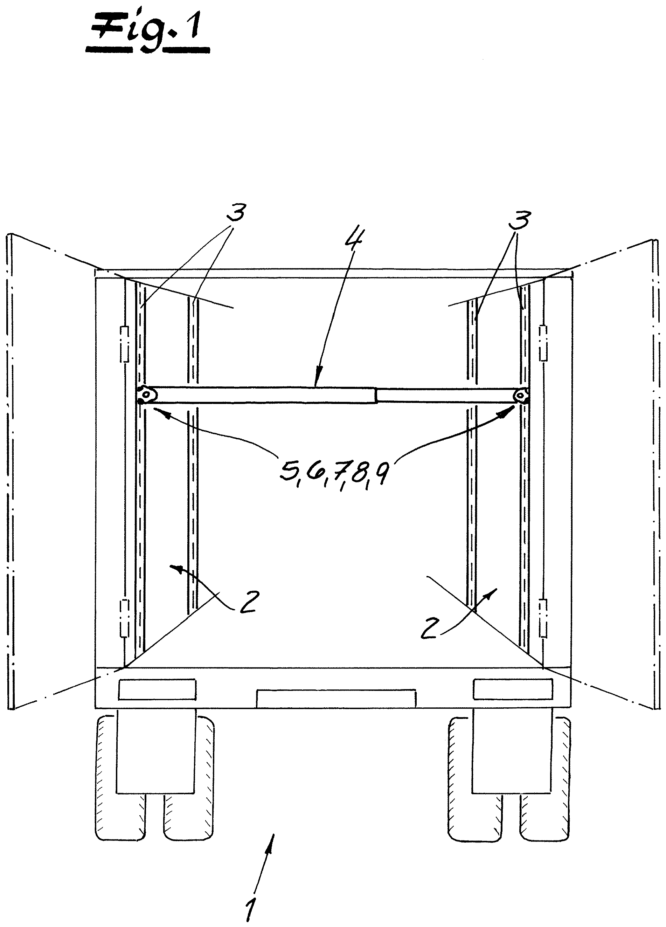

In den Figuren ist eine Tragbalkenbaugruppe zur Verwendung in einem Lastenaufbau 1 wiedergegeben. Bei dem Lastenaufbau 1 handelt es sich entsprechend der Darstellung in der Figur 1 um das Ladevolumen eines LKWs bzw. einen entsprechenden Kastenaufbau auf dem Lkw. Grundsätzlich kann der Lastenaufbau 1 auch als Eisenbahnwaggon oder sogar Container oder sonst wie ausgebildeter Aufbau zum Transport von Lasten ausgebildet sein. Dazu ist der Lastenaufbau 1 mit zwei sich gegenüberliegenden Ladebordwänden 2 ausgerüstet. An den Ladebordwänden 2 sind jeweils Gleitschienen 3 vorgesehen, die sich ebenso wie die Ladebordwände 2 gegenüberliegen. Die Ladebordwände 2 sind über einen Boden miteinander verbunden. Ein hier dargestelltes Dach ist grundsätzlich entbehrlich.

Die Gleitschienen 3 verlaufen dabei überwiegend vertikal und können mithilfe eines zwischen den sich gegenüberliegenden Ladebordwänden 2 an den Gleitschienen 3 fixierten Tragbalkens 4 überbrückt werden. Im Regelfall sind mehrere Tragbalken 4 vorgesehen. Ebenso mehrere Gleitschienen 3 im Innern des Lastenanhängers 1.

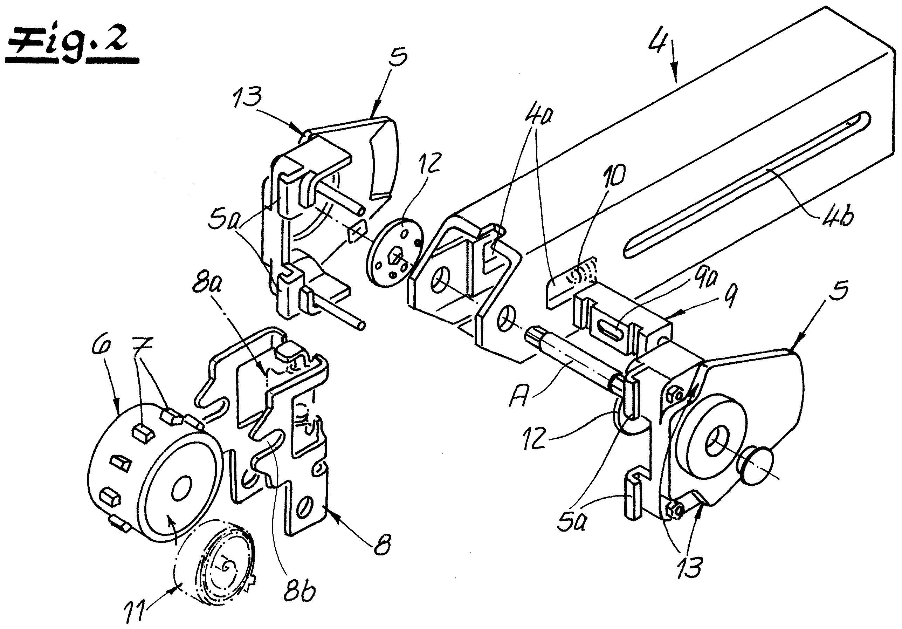

Der Tragbalken 4 ist entsprechend der Wiedergabe in den Figuren 2 und 3A bis 4B mit einer Verriegelungseinheit 5, 6, 7, 8, 9 ausgerüstet, und zwar jeweils endseitig. Die Verriegelungseinheit 5, 6, 7, 8, 9 sorgt dafür, dass der Tragbalken 4 gegenüber der zugehörigen Gleitschiene 3 lösbar verriegelt werden kann. Dazu ist jeweils endseitig des Tragbalkens 4 die betreffende Verriegelungseinheit 5, 6, 7, 8, 9 vorgesehen, die in die korrespondierende Gleitschiene 3 eingreift.

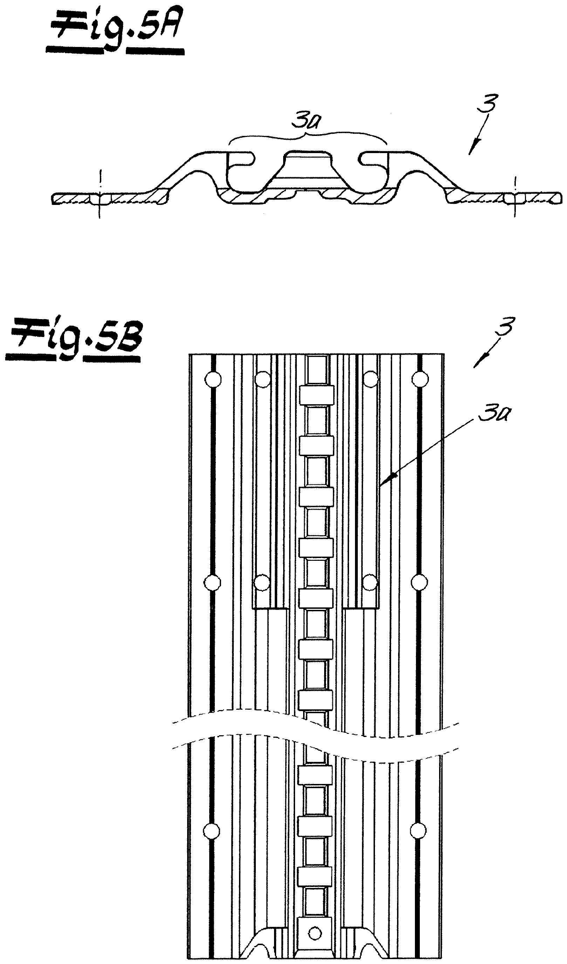

Anhand der Figuren 5A und 5B erkennt man, dass die betreffende Gleitschiene 3 mit einer Aussparung 3a ausgerüstet ist, über welche der Tragbalken 4 mit den beiden jeweils endseitig vorgesehenen Verriegelungseinheiten 5, 6, 7, 8, 9 in die Gleitschiene 3 eingeführt werden kann. Die Aussparung 3a findet sich nach dem Ausführungsbeispiel in der Nähe des die beiden Ladebordwände 2 miteinander verbindenden Bodens. Dadurch lässt sich der Tragbalken 4 inklusive der beiden jeweils endseitigen Verriegelungseinheiten 5, 6, 7, 8, 9 besonders einfach und komfortabel in die zugehörigen Gleitschienen 3 einführen.

Die Verriegelungseinheit 5, 6, 7, 8, 9 ist ihrerseits mit einem Löseelement 8, 9 für wenigstens einen Verriegelungszapfen 7 ausgerüstet. Der Verriegelungszapfen 7 greift in mithilfe des Löseelementes 8, 9 vorgegebenem verriegelten Zustand in die Gleitschiene 3 ein und sorgt dafür, dass die Verriegelungseinheit 5, 6, 7, 8, 9 in diesem verriegelten Zustand an bzw. gegenüber der Gleitschiene 3 festgelegt ist. Gleiches gilt für den Tragbalken 4. Dagegen gibt der Verriegelungszapfen 7 mithilfe des Löseelementes 8, 9 die Verriegelungseinheit 5, 6, 7, 8, 9 in ihrem entriegelten Zustand gegenüber der zugehörigen Gleitschiene 3 frei. Gleiches gilt für den Tragbalken 4.

Als Folge hiervon kann der zugehörige Tragbalken 4 bei in entriegeltem Zustand befindlichen beiden Verriegelungseinheiten 5, 6, 7, 8, 9 in seiner Höhe verstellt werden bzw. kann auch eine Schrägstellung gegenüber den Ladebordwänden 2 einnehmen. Um an dieser Stelle etwaige Längenänderungen auszugleichen, mag der Tragbalken 4 beispielsweise in seiner Mitte teleskopierend ausgebildet sein, was im Detail nicht näher dargestellt ist.

Erfindungsgemäß ist die Auslegung nun so getroffen, dass der Verriegelungszapfen 7 zur Entriegelung gegenüber der Gleitschiene 3 und damit auch dem Tragbalken 4 schwenkbar ausgebildet ist bzw. verschwenkt werden kann. Außerdem führt zumindest eine Schrägstellung des Tragbalkens 4 dazu, dass die hieran, d.h. am Tragbalken 4, jeweils drehbar angeschlossene Verriegelungseinheit 5, 6, 7, 8, 9 in ihren entriegelten Zustand überführt wird. Man erkennt, dass zu diesem Zweck zunächst einmal mehrere Verriegelungszapfen 7 vorgesehen sind. Die Verriegelungszapfen 7 sind dazu am Außenumfang eines Verriegelungszylinders 6 angeordnet. Außerdem ist die Auslegung so getroffen, dass der Verriegelungszylinder 6 drehbar um eine Achse A ausgebildet ist.

Die Achse A dient zugleich zur drehbaren Lagerung eines in die Gleitschiene 3 eingreifenden Führungsflansches 5. Tatsächlich sind nach dem Ausführungsbeispiel zwei den Verriegelungszylinder 6 zwischen sich aufnehmende Führungsflansche 5 als Bestandteile der Verriegelungseinheit 5, 6, 7, 8, 9 realisiert. Die Führungsflansche 5 verfügen jeweils über Anschläge 5a, mit deren Hilfe sie in die zugehörigen Gleitschiene 3 eingreifen und unter Rückgriff auf die Anschläge 5a in der betreffenden Gleitschiene 3 zu ihrer Vertikalverschiebung geführt werden können. Außerdem verhindern die Anschläge 5a, dass sich der betreffende Tragbalken 4 von der Gleitschiene 3 löst.

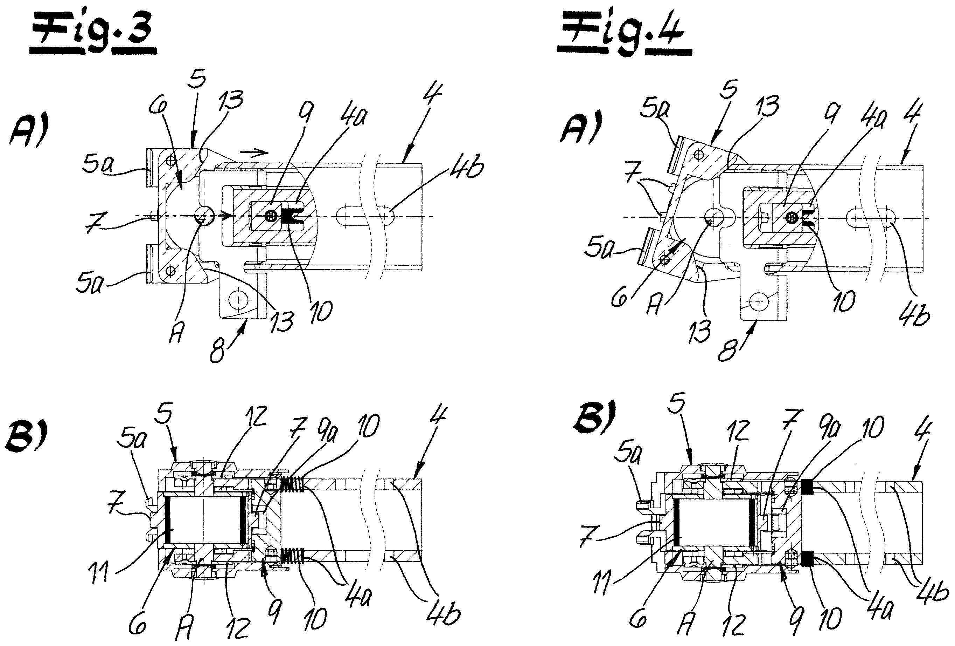

Die beiden Führungsflansche 5 und der Verriegelungszylinder 6 sind dabei um die gemeinsame Achse A drehbar an den Tragbalken 4 angeschlossen. Dadurch lässt sich die Verriegelungseinheit 5, 6, 7, 8, 9 insgesamt beim Übergang vom beispielsweise in der Figur 3A dargestellten verriegelten Zustand in den entriegelten Zustand entsprechend der Figur 4A um die Achse A verschwenken. Gleiches gilt für den Tragbalken 4. Als Folge dieser Schwenkbewegung beispielsweise im Uhrzeigersinn kommt die Verriegelungseinheit 5, 6, 7, 8, 9 von der zugehörigen Gleitschiene 3 frei und kann der Tragbalken 4 gegenüber der Gleitschiene 3 beispielsweise in seiner Höhe verändert werden. Auch Schrägstellungen des Tragbalkens 4 gegenüber den Ladebordwänden 2 bzw. den Gleitschienen 3 sind denkbar. D.h., durch eine Schrägstellung des Tragbalkens 4 wird die Verriegelungseinheit 5, 6, 7, 8, 9 entriegelt.

Das zuvor bereits angesprochene Löseelement 8, 9 stellt einen Bestandteil der Verriegelungseinheit 5, 6, 7, 8, 9 dar. Ebenso der Verriegelungszylinder 6 mit den hieran angeordneten Verriegelungszapfen 7. Außerdem gehören zur Verriegelungseinheit 5, 6, 7, 8, 9 die beiden den Verriegelungzylinder 6 zwischen sich aufnehmenden Führungsflansche 5. Das Löseelement 8, 9 ist nun nach dem Ausführungsbeispiel als linear beaufschlagbarer Löseschieber 8, 9 ausgebildet. Dazu greift der Löseschieber 8, 9 mit zumindest einem Führungszapfen 9 in eine Linearführung 4a am Tragbalken 4 ein. Eine weitere Linearausnehmung 4b am Tragbalken 4 sorgt beispielsweise dafür, dass der Tragbalken 4 im Bedarfsfall teleskopieren kann. Dazu mögen beispielsweise zwei ineinandergesteckte Vierkantrohre vorgesehen sein, wobei das äußere Vierkantrohr mit einem Bolzen die beiden sich gegenüberliegenden Linearausnehmungen 4b durchgreift. Selbstverständlich sind auch andere Möglichkeiten zur Teleskopierwirkung des Tragbalkens 4 denkbar und werden von der Erfindung mitumfasst.

Man erkennt, dass der Löseschieber 8, 9 im Querschnitt U-förmig ausgebildet ist. Die U-Basis wird dabei von einem mit dem Verriegelungszapfen 7 wechselwirkenden Verriegelungsblock 9 gebildet, der zugleich die Funktion des Führungszapfens 9 in der Linearführung 4a übernimmt. Der Verriegelungsblock 9 ist dabei in einer Handhabe 8 des Löseschiebers 8, 9 gelagert. Dazu ist die Handhabe 8 mit einer Feder 8a ausgerüstet, die für eine flexible Verbindung zwischen der Handhabe 8 einerseits und dem Verriegelungsblock 9 andererseits sorgt.

Tatsächlich ist auf diese Weise der Verriegelungsblock 9 schwimmend an der Handhabe 8 gelagert. Dazu ist die Feder 8a nach dem Ausführungsbeispiel und nicht einschränkend als Torsionsfeder ausgelegt. Außerdem sorgt die Reibung zwischen dem Verriegelungsblock 9 und dem Verriegelungszylinder 8 bzw. seinen am Außenumfang vorgesehenen Verriegelungszapfen 7 dafür, dass der Verriegelungsblock 9 immer in der Verriegelungsstellung bleibt, solange Last auf dem Tragbalken 4 vorhanden ist bzw. an diesem angreift. Zusammen mit dem Verriegelungsblock 9 verbleibt dann natürlich auch die Verriegelungseinheit 5, 6, 7, 8, 9 in Ihrem verriegelten Zustand.

Man erkennt, dass der Verriegelungsblock 9 dazu eine Ausnehmung 9a aufweist, in welche in verriegeltem Zustand der Verriegelungseinheit 5, 6, 7, 8, 9 ein Verriegelungszapfen 7 am Verriegelungszylinder 6 eingreift. Bei diesem in die Ausnehmung 9a des Verriegelungsblockes 9 eingreifenden Verriegelungszapfen 7 handelt es sich im Allgemeinen um denjenigen, der einem Verriegelungszapfen 7 diametral gegenüberliegt, welcher seinerseits zur Verriegelung der Verriegelungseinheit 5, 6, 7, 8, 9 in eine Ausnehmung in der zugehörigen Gleitschiene 3 eingreift. Solange der Verriegelungsblock 9 mit seiner Ausnehmung 9a den Verriegelungszapfen 7 blockiert, kann der Verriegelungszylinder 6 nicht rotieren und befindet sich die Verriegelungseinheit 5, 6, 7, 8, 9 in ihrem verriegelten Zustand.

Hierfür sorgt ergänzend eine den Verriegelungsblock 9 in Richtung des Verriegelungszapfens 7 beaufschlagende Feder 10. Die Feder 10 ist dabei endseitig der Linearführung 4a im Innern des Tragbalkens 4 vorgesehen. Die Feder 10 sorgt dafür, dass der Verriegelungsblock 9 in Anlage an den Verriegelungszylinder 6 beaufschlagt wird. Ferner unterstützt die Feder 10 zusammen mit der Feder 8a die schwimmende Lagerung des Verriegelungsblockes 9 gegenüber der Handhabe 8.

Außerdem erkennt man noch bei einer vergleichenden Betrachtung der Figuren 2 und 3A bis 4B, dass der Löseschieber 8, 9 bzw. dessen Handhabe 8 mit einer Aufnahme 8b für die Achse A ausgerüstet ist. Die Aufnahme 8b für die Achse A ist dabei halbgeöffnet ausgebildet. Dadurch kann die Handhabe 8 bzw. der Löseschieber 8, 9 insgesamt ausgehend von der verriegelten Position der Verriegelungseinheit 5, 6, 7, 8, 9 entsprechend der Darstellung in der Figur 3A in die entriegelte Stellung nach der Figur 4A nach dem Ausführungsbeispiel "nach rechts" bewegt werden, wie dies ein entsprechender Pfeil in der Figur 3A andeutet. Diese Beaufschlagung der Handhabe 8 hat zur Folge, dass der Verriegelungsblock 9 gegen die Kraft der Feder 10 ebenfalls "nach rechts" im Ausführungsbeispiel bewegt wird. Das führt seinerseits dazu, dass der Verriegelungszylinder 6 freigegeben wird.

Dadurch kann auch der zuvor in die dem Verriegelungsblock 9 gegenüberliegende Rastung oder Öffnung im Innern der Gleitschiene 3 eingreifende Verriegelungszapfen 7 aus der betreffenden Rastung bzw. Öffnung herausschwenken. Die Verriegelungseinheit 5, 6, 7, 8, 9 nimmt auf diese Weise die beim Übergang von der Figur 3A zur Figur 4A nachvollziehbare entriegelte Position ein. Hierbei bewegt sich der Löseschieber 8, 9 gegenüber dem Tragbalken 4 linear und verschwenkt die Führungsflansche 5 um die gemeinsame Achse A, beispielsweise im hier dargestellten Uhrzeigersinn. Dabei greifen die beiden den Verriegelungszylinder 6 zwischen sich aufnehmenden Führungsflansche 5 mit ihren Anschlägen 5a unverändert in die zugehörige Gleitschiene 3 ein. Gleichwohl lässt sich die Verriegelungseinheit 5, 6, 7, 8, 9 gegenüber der zugehörigen Gleitschiene 3 in deren Längsrichtung verfahren. Gleiches gilt für den Tragbalken 4. Auch etwaige Schrägstellungen des Tragbalkens 4 sind in diesem Zusammenhang möglich, wie ein Vergleich der Figuren 3A und 4A deutlich macht.

Von besonderer Bedeutung ist noch eine weitere Feder bzw. Wickelfeder 11, die in der Figur 2 wiedergegeben ist. Die Wickelfeder 11 ist spiralförmig ausgelegt und findet sich im Innern des Verriegelungszylinders 6. Die Wickelfeder 11 ist zwar fest mit dem Gehäuse des Verriegelungszylinders 6 verbunden, lässt sich jedoch über die Achse A beaufschlagen, allerdings nur in einer Drehrichtung. Diese Drehrichtung korrespondiert dazu, dass der Tragbalken 4 nach unten in Richtung auf den die beiden Ladebordwände 2 miteinander verbindenden Boden bewegt wird. In der Gegenrichtung wickelt sich dagegen die Wickelfeder 11 ab, bis die Verbindung zu den Gleitschienen 3 durchrutscht. Dadurch wird eine Beschädigung der Wickelfeder 11 vermieden.

Außerdem erkennt man noch anhand der Explosionsdarstellung in der Figur 2, dass die Achse A mithilfe von Sicherungsscheiben 12 beidseitig in den Führungsflanschen 5 gelagert ist bzw. diese durchgreift. Die Sicherungsscheibe 12 sorgt dafür, dass bei etwaiger und zu hoher Spannung an der Wickelfeder 11 die Achse A durchrutschen kann. Auf diese Weise werden nicht nur etwaige Beschädigungen der Wickelfeder 11 vermieden, sondern kann diese auch durch eine entsprechende Drehung der Achse A in einen gewünschten und vorgespannten Zustand überführt werden.

Wie zuvor bereits erläutert, sorgt zumindest die Schrägstellung des Tragbalkens 4 dafür, dass die hieran drehbar angeschlossene Verriegelungseinheit 5, 6, 7, 8, 9 in ihren entriegelten Zustand überführt wird. Das geschieht über das Löseelement 8, 9. Denn bei der genannten Schrägstellung des Tragbalkens 4 wird die Handhabe 8 des Löseelementes 8, 9 durch eine Schulter 13 beaufschlagt. Diese Schulter 13 am zugehörigen Führungsflansch 5 sorgt dafür, dass beim Übergang von der neutralen bzw. verriegelten Position der Verriegelungseinheit 5, 6, 7, 8, 9 der Figur 3A zur entriegelten Position nach der Figur 4A die Handhabe 8 "nach rechts" bewegt wird, und zwar unter gleichzeitiger Kompression der Feder 10. Gleiches geschieht dann, wenn die Handhabe 8 manuell beaufschlagt wird.

Die Handhabe 8 bewegt sich dabei ihrerseits in Axialrichtung des Tragbalkens 4. Hierfür sorgt der Verriegelungsblock 9, welcher in die Linearführung 4a am Tragbalken 4 eingreift. Als Folge hiervon hat jede Schrägstellung des Tragbalkens 4 gegenüber den Gleitschienen 3 folglich auch gegenüber dem die beiden Ladebordwände 2 miteinander verbindenden Boden zur Folge, dass hierdurch automatisch beide Verriegelungseinheiten 5, 6, 7, 8, 9 in ihren entriegelten Zustand überführt werden.

## Patentansprüche

1. Tragbalkenbaugruppe zur Verwendung in einem Lastenaufbau (1), mit wenigstens einem zwischen zwei sich gegenüberliegenden Ladebordwänden (2) fixierbaren Tragbalken (4), welcher jeweils endseitig mithilfe einer lösbaren Verriegelungseinheit (5, 6, 7, 8, 9) in eine zugehörigen Gleitschiene (3) der Ladebordwand (2) eingreift, wobei
die Verriegelungseinheit (5, 6, 7, 8, 9) ein Löseelement (8, 9) für wenigstens einen Verriegelungszapfen (7) aufweist, und wobei
der Verriegelungszapfen (7) in mithilfe des Löseelementes (8, 9) vorgegebenem entriegelten Zustand die Verriegelungseinheit (5, 6, 7, 8, 9) gegenüber der Gleitschiene (3) freigibt und in verriegeltem Zustand gegenüber der Gleitschiene (3) festlegt,
**dadurch gekennzeichnet, dass**
zumindest eine Schrägstellung des Tragbalkens (4) die hieran drehbar angeschlossene Verriegelungseinheit (5, 6, 7, 8, 9) in ihren entriegelten Zustand überführt.

2. Baugruppe nach Anspruch 1, **dadurch gekennzeichnet, dass** mehrere Verriegelungszapfen (7) vorgesehen sind, die vorzugsweise am Außenumfang eines Verriegelungszylinders (6) angeordnet sind.

3. Baugruppen nach Anspruch 2, **dadurch gekennzeichnet, dass** der Verriegelungszylinder (6) drehbar um eine Achse (A) ausgebildet ist und vorzugsweise eine im Innern angeordnete Wickelfeder (11) aufweist, die in einer Verschieberichtung des Tragbalkens (4) zwischen den Ladebordwänden (2) gespannt wird und in der entgegengesetzten Richtung durchrutscht.

4. Baugruppe nach Anspruch 3, **dadurch gekennzeichnet, dass** die Achse (A) zugleich zur drehbaren Lagerung der Verriegelungseinheit (5, 6, 7, 8, 9) sowie von zumindest einem in die Gleitschiene (3) eingreifenden Führungsflansch (5) ausgebildet ist.

5. Baugruppe nach Anspruch 4, **dadurch gekennzeichnet, dass** zwei den Verriegelungszylinder (6) zwischen sich aufnehmende Führungsflansche (5) vorgesehen sind.

6. Baugruppe nach Anspruch 5, **dadurch gekennzeichnet, dass** die beiden Führungsflansche (5) und der Verriegelungszylinder (6) um die gemeinsame Achse (A) drehbar an den Tragbalken (4) angeschlossen sind.

7. Baugruppe nach einem der Ansprüche 1 bis 6, **dadurch gekennzeichnet, dass** das Löseelement (8,9) als linear beaufschlagbarer Löseschieber (8, 9) ausgebildet ist.

8. Baugruppe nach Anspruch 7, **dadurch gekennzeichnet, dass** der Löseschieber (8, 9) mit zumindest einem Führungszapfen (9) in eine Linearführung (4a) am Tragbalken (4) eingreift.

9. Baugruppe nach Anspruch 7 oder 8, **dadurch gekennzeichnet, dass** der Löseschieber (8, 9) im Querschnitt U-förmig ausgebildet ist.

10. Baugruppe nach Anspruch 9, **dadurch gekennzeichnet, dass** der Löseschieber (8, 9) einen mit dem Verriegelungszapfen (7) wechselwirkenden Verriegelungsblock (9) sowie eine Handhabe (8) aufweist.

11. Baugruppe nach Anspruch 10, **dadurch gekennzeichnet, dass** der Verriegelungsblock (9) als Führungszapfen (9) die Linearführung (4a) im Tragbalken (4) durchgreift.

12. Baugruppe nach Anspruch 10 oder 11, **dadurch gekennzeichnet, dass** dem Verriegelungsblock (9) zumindest eine ihn in Richtung des Verriegelungszapfens (7) beaufschlagende Feder (8a, 10) zugeordnet ist, wobei der Verriegelungsblock (9) mittels der Feder (8a, 10) vorzugsweise schwimmend gegenüber der Handhabe (8) gelagert ist.

13. Baugruppe nach einem der Ansprüche 7 bis 12, **dadurch gekennzeichnet, dass** der Löseschieber (8, 9) eine Aufnahme (8b) für die Achse (A) aufweist.

14. Baugruppe nach Anspruch 13, **dadurch gekennzeichnet, dass** die Aufnahme (8b) halbgeöffnet ausgebildet ist.

15. Lastenaufbau (1), **gekennzeichnet durch** eine Tragbalkenbaugruppe nach einem der Ansprüche 1 bis 14.

## Geänderte Patentansprüche

### Geänderte Patentansprüche gemäss Regel 137(2) EPÜ.

1. Tragbalkenbaugruppe zur Verwendung in einem Lastenaufbau (1), mit wenigstens einem zwischen zwei sich gegenüberliegenden Ladebordwänden (2) fixierbaren Tragbalken (4), welcher jeweils endseitig mithilfe einer lösbaren Verriegelungseinheit (5, 6, 7, 8, 9) in eine zugehörige Gleitschiene (3) der Ladebordwand (2) eingreift, wobei
die Verriegelungseinheit (5, 6, 7, 8, 9) ein Löseelement (8, 9) für wenigstens einen Verriegelungszapfen (7) aufweist, wobei ferner
der Verriegelungszapfen (7) in mithilfe des Löseelementes (8, 9) vorgegebenem entriegelten Zustand die Verriegelungseinheit (5, 6, 7, 8, 9) gegenüber der Gleitschiene (3) freigibt und in verriegeltem Zustand gegenüber der Gleitschiene (3) festlegt, und wobei
zumindest eine Schrägstellung des Tragbalkens (4) die hieran drehbar angeschlossene Verriegelungseinheit (5, 6, 7, 8, 9) in ihren entriegelten Zustand überführt.
**dadurch gekennzeichnet, dass**
das Löseelement (8, 9) als linear beaufschlagbarer Löseschieber (8, 9) ausgebildet ist, wobei
der Löserschieber (8, 9) eine halbgeöffnet ausgebildete Aufnahme (8b) für eine Achse (A) aufweist.

2. Baugruppe nach Anspruch 1, **dadurch gekennzeichnet, dass** mehrere Verriegelungszapfen (7) vorgesehen sind, die vorzugsweise am Außenumfang eines Verriegelungszylinders (6) angeordnet sind.

3. Baugruppe nach Anspruch 2, **dadurch gekennzeichnet, dass** der Verriegelungszylinder (6) drehbar um eine Achse (A) ausgebildet ist und vorzugsweise eine im Innern angeordnete Wickelfeder (11) aufweist, die in einer Verschieberichtung des Tragbalkens (4) zwischen den Ladebordwänden (2) gespannt wird und in der entgegengesetzten Richtung durchrutscht.

4. Baugruppe nach Anspruch 3, **dadurch gekennzeichnet, dass** die Achse (A) zugleich zur drehbaren Lagerung der Verriegelungseinheit (5, 6, 7, 8, 9) sowie von zumindest einem in die Gleitschiene (3) eingreifenden Führungsflansch (5) ausgebildet ist.

5. Baugruppe nach Anspruch 4, **dadurch gekennzeichnet, dass** zwei den Verriegelungszylinder (6) zwischen sich aufnehmende Führungsflansche (5) vorgesehen sind.

6. Baugruppe nach Anspruch 5, **dadurch gekennzeichnet, dass** die beiden Führungsflansche (5) und der Verriegelungszylinder (6) um die gemeinsame Achse (A) drehbar an den Tragbalken (4) angeschlossen sind.

7. Baugruppe nach einem der Ansprüche 1 bis 6, **dadurch gekennzeichnet, dass** der Löseschieber (8, 9) mit zumindest einem Führungszapfen (9) in eine Linearführung (4a) am Tragbalken (4) eingreift.

8. Baugruppe nach einem der Ansprüche 1 bis 7, **dadurch gekennzeichnet, dass** der Löseschieber (8, 9) im Querschnitt u-förmig ausgebildet ist.

9. Baugruppe nach Anspruch 8, **dadurch gekennzeichnet, dass** dem Verriegelungsblock (9) zumindest eine ihn in Richtung des Verriegelungszapfens (7) beaufschlagende Feder (8a, 10) zugeordnet ist, wobei der Verriegelungsblock (9) mittels der Feder (8a, 10) vorzugsweise schwimmend gegenüber der Handhabe (8) gelagert ist.

10. Baugruppe nach Anspruch 9, **dadurch gekennzeichnet, dass** der Löseschieber (8, 9) einen mit dem Verriegelungszapfen (7) wechselwirkenden Verriegelungsblock (9) sowie eine Handhabe (8) aufweist.

11. Baugruppe nach Anspruch 9 oder 10, **dadurch gekennzeichnet, dass** dem Verriegelungsblock (9) zumindest eine ihn in Richtung des Verriegelungszapfens (7) beaufschlagende Feder (8a, 10) zugeordnet ist, wobei der Verriegelungsblock (9) mittels der Feder (8a, 10) vorzugsweise schwimmend gegenüber der Handhabe (8) gelagert ist.

12. Lastenaufbau (1) **gekennzeichnet durch** eine Tragbalkenbaugruppe nach einem der Ansprüche 1 bis 11.
